(19) Europäisches Patentamt
European Patent Office
Office européen des brevets

(11) Veröffentlichungsnummer: **0 009 602**
**A1**

# (12) EUROPÄISCHE PATENTANMELDUNG

(21) Anmeldenummer: **79103082.8**

(22) Anmeldetag: **22.08.79**

(51) Int. Cl.³: **C 08 G 61/02**
C 07 C 13/465

(30) Priorität: **29.08.78 DE 2837604**

(43) Veröffentlichungstag der Anmeldung:
**16.04.80 Patentblatt 80/8**

(84) Benannte Vertragsstaaten:
**DE FR GB IT**

(71) Anmelder: **BAYER Aktiengesellschaft**
**Zentralbereich Patente,Marken und Lizenzen Bayerwerk**
**D-5090 Leverkusen 1(DE)**

(72) Erfinder: **Käfer, Peter, Dr.**
**Bodelschwinghstrasse 18**
**D-4150 Krefeld(DE)**

(72) Erfinder: **Neuray, Dieter, Dr.**
**Buschstrasse 149**
**D-4150 Krefeld(DE)**

(72) Erfinder: **Bottenbruch, Ludwig, Dr.**
**Woehlerstrasse 5**
**D-4150 Krefeld(DE)**

(72) Erfinder: **Margotte, Dieter, Dr.**
**Wedelstrasse 48**
**D-4150 Krefeld(DE)**

## (54) Verfahren zur Herstellung von Polyindanen.

(57) Die Erfindung betrifft ein Verfahren zur Herstellung von Polyindanen und ist dadurch gekennzeichnet, daß

1,4-Bis-(isopropyl)benzole der Formel

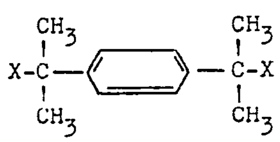

worin X OH oder Cl bedeuten, in inerten Lösungsmitteln in anwesenheit von Protonensäuren bzw. Friedel-Crafts-Katalysatoren bei Temperaturen von 0 bis 150°C umgesetzt werden. Die bisher bekannten Verfahren haben den Nachteil, daß sie von dem schwer zugänglichen Diisopropenylbenzol ausgehen.

EP 0 009 602 A1

Croydon Printing Company Ltd

BAYER AKTIENGESELLSCHAFT 5090 Leverkusen, Bayerwerk
Zentralbereich Fr/if
Patente, Marken und Lizenzen

Verfahren zur Herstellung von Polyindanen

Die vorliegende Erfindung betrifft ein Verfahren zur Herstellung von Polyindanen aus 1,4-Bis-(2-chlorisopropyl)-benzol bzw. 1,4-Bis-(2-hydroxyisopropyl)-benzol.

Die Herstellung von Indanpolymeren aus Diisopropenylbenzol ist in GB-PS 85o 363, GB-PS 864 132 und GB-PS 864 275 beschrieben. Als Katalysatoren werden Friedel-Crafts-Katalysatoren (z.B.$BF_3$ und Sn $Cl_4$) verwendet, als Lösungsmittel vorzugsweise Tetrachloräthan. Um zu schmelzbaren Produkten zu gelangen, benötigt man Reaktionszeiten über 25 Stunden. Die Reaktionstemperaturen liegen oberhalb von 8o°C, da bei tieferen Temperaturen verzweigte und ungesättigte Verbindungen gebildet werden.

Ein weiteres Verfahren zur Herstellung von Indanpolymerisaten ist in Doklady Akad. Nauk S.S.S.R 115 , 97-9 (1957) (vergl. Chemical Abstracts 52, 5341 h) von Yu. V. Mitin und N.A. Glukhov beschrieben . Ausgehend von 1,4-Diisopropenylbenzol, 4,4'-Diisopropenyldiphenylmethan und 4,4'-Diisopropenyldiphenyläthan werden in Anwesenheit von

$SnCl_4$ und HCl als Cokatalysator in Toluol bei 7o - 1oo°C lineare Polymere mit Indaneinheiten in der Polymerkette erhalten.

Die Herstellung von Indanpolymeren auf Basis von disubstituierten Phenylenoxiden ist in US-PS 3 663 625 und US-PS 3 725 346 beschrieben. Man läßt Bis-(1-alkylvinyl)-phenylenoxide oder Bis-(1-arylvinyl)-phenylenoxide in Methylenchloridlösung mit $SnCl_4$ vorreagieren. Die weitere Umsetzung erfolgt dann in der Schmelze bei Temperaturen bis zu 18o°C.

Die bisher bekannten Verfahren haben den Nachteil, daß sie von dem schwer zugänglichen Diisopropenylbenzol ausgehen.

Gegenstand der Erfindung ist ein Verfahren zur Herstellung von Polyindanen, dadurch gekennzeichnet,

daß an den Isopropylgruppen substituierte 1,4-Bis-(isopropyl)benzole der Formel

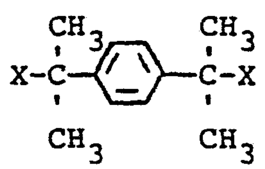

worin X OH oder Cl bedeuten, in inerten Lösungsmitteln in Anwesenheit von Protonensäuren bzw. Friedel-Crafts-Katalysatoren bei Temperaturen von O-15o °C umgesetzt werden.

Für das vorliegende Verfahren sind inerte, vorzugsweise polare Lösungsmittel, beispielsweise chlorierte aliphatische Kohlenwasserstoffe wie Methylenchlorid, 1,2-Dichloräthan und Tetrachloräthan oder chlorierte Aromaten wie Chlorbenzol oder o-Dichlorbenzol geeignet. Bevorzugte Verwendung

finden Methylenchlorid und Chlorbenzol.

Als Katalysatoren können Protonensäuren oder Friedel-Crafts-Katalysatoren eingesetzt werden. Einige Beispiele für geeignete Protonensäuren sind $H_2SO_4$, $H_3PO_4$ und HCl. Als Friedel-Crafts-Katalysatoren finden z.B. $SnCl_4$, $SbCl_5$, $BF_3$ · Ätherat oder $TiCl_4$ Verwendung. Bevorzugt werden $SnCl_4$ und $TiCl_4$ eingesetzt.

Die Konzentration an Friedel-Crafts-Katalysatoren richtet sich nach der eingesetzten Ausgangsverbindung. Bei Einsatz von 1,4-Bis-(2-chlorisopropyl)-benzol kann sie 1-4o Mol-%, vorzugsweise 5-2o Mol-%, Katalysator, bezogen auf die eingesetzte Gewichtsmenge an 1,4-Bis-(2-chlorisopropyl)-benzol betragen. Bei Einsatz von 1,4-Bis-(2-hydroxyisopropyl)-benzol sind 4o-15o Mol-%, vorzugsweise 8o-12o Mol-%, Katalysator, bezogen auf die eingesetzten Gewichtsmengen an 1,4-Bis-(2-hydroxyisopropyl)-benzol empfehlenswert. Die als Katalysatoren wirkenden Protonensäuren, vorzugsweise konzentrierte Schwefelsäure, können auch als Lösungsmittel, ggf. in Kombination mit anderen Lösungsmitteln wie z.B. Tetrachloräthan eingesetzt werden.

Die Polykondensation findet im allgemeinen bei Temperaturen von o-15o °C , bevorzugt bei 2o-1oo°C, besonders bevorzugt bei 4o-6o°C, statt. Die Aufarbeitung erfolgt entweder durch Ausfällen aus einem geeigneten Fällungsmittel wie Methanol oder Aceton oder durch Eindampfen der Reaktionslösung nach Zerstören des Katalysators mit verdünnten wässrigen Säuren.

Ein weiterer Erfindungsgegenstand sind die nach dem vorliegenden Verfahren erhaltenen Polyindane.

Die gemäß der vorliegenden Erfindung erhaltenen Indanpolymere sind hochmolekulare, lineare, lösliche und thermoplastisch verarbeitbare Verbindungen mit Zahlenmittel Molekulargewichten von 4.000 - 20.000, bevorzugt 6.000 - 15.000, gemessen durch Membranosmose. Die erfindungsgemäßen Indanpolymere zeichnen sich durch eine ausgezeichnete Wärmeformbeständigkeit aus und können zur Herstellung von Kunststoffen und Überzugsmitteln eingesetzt werden.

Der Erfindungsgegenstand soll durch die folgenden Beispiele erläutert werden: Die angegebenen Prozentgehalte beziehen sich auf das Gewicht.

Beispiel 1

34,7 g 1,4-Bis-(2-chlorisopropyl)-benzol (o,15 Mol) werden in 2oo ml Methylenchlorid gelöst und in einen Dreihalskolben mit Rührer, Rückflußkühler, Tropftrichter und Gaseinleitungsrohr gegeben. Es wird Stickstoff durch die Reaktionsmischung geleitet und auf 4o°C erhitzt. Danach tropft man 3,9 g $SnCl_4$ (o,o15 Mol) in 2oo ml Methylenchlorid zu. Man rührt noch 3 Stunden unter Rückfluß und fällt das Produkt mit 4 l Methanol aus.

Ausbeute : 21,3 g ( 9o % der Theorie )

Beispiel 2

Zu 28,8 g 1,4-Bis-(2-hydroxyisopropyl)-benzol (o,15 Mol) in 2oo ml Methylenchlorid werden bei + 4o°C unter Einleiten von Stickstoff 39,1 g $SnCl_4$ (o,15 Mol) in 2oo ml Methylenchlorid gegeben. Nach einer Reaktionszeit von 3 Stunden bei + 4o°C fällt man das Reaktionsgemisch mit 4 l Methanol aus.

Ausbeute : 23 g (98 % der Theorie)

Beispiel 3

Zu 28,8 g 1,4-Bis-(2-hydroxyisopropyl)-benzol (o,15 Mol) in 2oo ml Chlorbenzol gibt man bei + 6o°C unter Rühren und Durchleiten von Stickstoff eine Lösung von 46,9 g $SnCl_4$ (o,18 Mol) in 2oo ml Chlorbenzol. Nach einer Reaktionszeit von 3 Stunden bei + 6o°C wird das Reaktionsprodukt mit 4 l Methanol ausgefällt.

Ausbeute : 2o,9 g (89 % der Theorie)

Beispiel 4

Zu einer Lösung von 5,7 g $TiCl_4$ (o,o3o Mol) in 2oo ml Methylenchlorid wird bei + 4o°C unter Rühren und Einleiten von Stickstoff eine Lösung von 34,7 g 1,4-Bis-(2-chlor-isopropyl)-benzol (o,15 Mol) in Methylenchlorid zugetropft. Das Produkt wird nach 5 Stunden mit 4 l Methanol ausgefällt.

Ausbeute : 2o,2 g ( 85 % der Theorie)

Beispiel 5

Zu 1oo g 1,4-Bis-(2-hydroxyisoproyl)-benzol (o,51 Mol) gibt man 15o ml Wasser, 15o ml 96 %ige $H_2SO_4$ und 25o ml 1,1,2,2-Tetrachloräthan. Das Reaktionsgemisch wird 2o Stunden bei 13o°C gerührt. Nach dem Abkühlen wird das Produkt in 5 l Methanol gegossen, abfiltriert und gründlich mit Wasser und Methanol gewaschen.

Ausbeute 76,5 g ( 94 % der Theorie )

Die relativen Lösungsviskositäten ($\eta$ rel), thermische Eigenschaften und Molekulargewichte der Polyindane gemäß den Beispielen 1-5 sind der folgenden Tabelle zu entnehmen.

| Beispiel | 1 | 2 | 3 | 4 | 5 |
|---|---|---|---|---|---|
| $\eta$ rel | 1,2o | - | 1,17 | 1,15 | - |
| Mn | 14.5oo | - | 12.ooo | 11.5oo | - |
| $E_T$ (°C) | | | | | |
| durch DTA | 253 | 312 | 265 | 25o | 244 |
| durch TMA | 244 | 295 | 253 | 241 | 232 |

| Beispiel | 1 | 2 | 3 | 4 | 5 |
|---|---|---|---|---|---|
| Beginn der thermischen Zersetzung nach DTA (°C) | 4oo | 41o | 4oo | 4oo | 385 |

$\eta$ rel : gemessen in o,5 %iger Methylenchloridlösung bei 25°C

$M_n$ : gemessen durch Membranosmose in Dioxan

$E_T$ : Erweichungstemperatur gemessen durch DTA bzw. TMA

DTA : Differentialthermoanalyse unter Stickstoff (Heizrate 2o°K/min)

TMA : Thermomechanische Analyse (Zugmethode, Heizrate 5°K/min)

## Patentansprüche

1. Verfahren zur Herstellung von Polyindanen, dadurch gekennzeichnet,

daß 1,4-Bis-(isopropyl)benzole der Formel

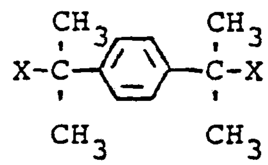

worin X OH oder Cl bedeuten, in inerten Lösungsmitteln in Anwesenheit von Protonensäuren bzw. Friedel-Crafts-Katalysaoten bei Temperaturen von o - 15o $^{o}$C umgesetzt werden.

2. Verfahren zur Herstellung von Polyindanen gemäß Anspruch 1,dadurch gekennzeichnet, daß man 1,4-Bis-(2-chlorisopropyl)-benzol in Methylenchlorid bei 3o-4o$^{o}$C mit $SnCl_4$ umsetzt.

3. Verfahren zur Herstellung von Polyindanen gemäß Anspruch 1,dadurch gekennzeichnet, daß man 1,4-Bis-(2-hydroxyisopropyl)-benzol in Chlorbenzol bei Temperaturen von 5o-6o $^{o}$C mit $SnCl_4$ umsetzt.

0009602

Nummer der Anmeldung

Europäisches Patentamt

# EUROPÄISCHER RECHERCHENBERICHT

EP 79 103 082.8

| Kategorie | EINSCHLÄGIGE DOKUMENTE<br>Kennzeichnung des Dokuments mit Angabe, soweit erforderlich, der maßgeblichen Teile | betrifft Anspruch |
|---|---|---|
| | DE - B - 1 297 101 (ALLIED CHEMICAL CORP.)<br>* Seite 1, Zeilen 14 bis 37;<br>Spalte 1, Zeile 67 bis Spalte 2, Zeile 40 *<br>-- | 1 |
| | US - A - 3 792 096 (GEMMILL et al.)<br>* Spalte 3, Zeilen 65 bis 74;<br>Spalte 4, Zeilen 4 bis 6 *<br>-- | 1 |
| D,A | GB - A - 864 275 (IMPERIAL CHEMICAL INDUSTRIES)<br>-- | |
| D,A | US - A - 3 725 346 (NEVILLE)<br>* Beispiel V *<br>---- | |

KLASSIFIKATION DER ANMELDUNG (Int.Cl.3)

C 08 G 61/02
C 07 C 13/465

RECHERCHIERTE SACHGEBIETE (Int. Cl.3)

C 07 C 13/465
C 08 F 112/34
C 08 G 61/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 15-01-1980 | KRAIL |